# EUROPEAN PATENT APPLICATION

(11) **EP 2 635 069 A1**
(43) Date of publication of application: **04.09.2013**
(21) Application number: 11837577.3
(22) Date of filing: 02.11.2011
(51) Int. Cl.: H04W 36/36, G10L 19/00

(54) **METHOD, DEVICE, AND SYSTEM FOR CONTROLLING SPEECH ENCODING RATE**

(30) Priority: 02.11.2010 CN 201010532385
(71) Applicant: Huawei Technologies Co., Ltd., Shenzhen, Guangdong 518129 (CN)
(72) Inventor: ZHU, Xing, Shenzhen Guangdong 518129 (CN); GUO, Jiang, Guangdong 518129 (CN); LIU, Jun, Shenzhen Guangdong 518129 (CN); YAN, Kai, Shenzhen Guangdong 518129 (CN)
(74) Representative: Epping - Hermann - Fischer
(86) International application number: PCT/CN2011/081682
(87) International publication number: WO 2012/059051

(57) **Abstract**

The present invention relates to the communications field and discloses a method, a device, and a system for controlling a voice encoding rate. The method includes: receiving a call pre-handover notification, where the call pre-handover notification carries a voice encoding type used by a local mobile station MS after a call handover; and setting a rate adjustment indication according to the voice encoding type used by the local MS after the call handover, and sending the rate adjustment indication to a peer MS, so that the peer MS performs voice encoding according to the rate adjustment indication until the local MS completes the call handover. The device includes a receiving module, a setting module, and a sending module. In the present invention, a rate adjustment indication is set according to a voice encoding type used by a local MS after a call handover, and the rate adjustment indication is sent to a peer MS, so that the peer MS performs voice encoding according to the rate adjustment indication, thereby avoiding silence caused by a local MS's failure in receiving a high-rate voice frame sent by the peer MS.

## Description

This application claims priority to Chinese Patent Application No. 201010532385.8, filed with the Chinese Patent Office on November 2, 2010 and entitled "METHOD, DEVICE, AND SYSTEM FOR CONTROLLING VOICE ENCODING RATE", which is incorporated herein by reference in its entirety.

### FIELD OF THE INVENTION

The present invention relates to the communications field, and in particular, to a method, a device, and a system for controlling a voice encoding rate.

### BACKGROUND OF THE INVENTION

After AoIP (A-interface user plane over IP) is introduced in the GSM (Global System for Mobile communications, global system for mobile communications), a significant improvement is required to improve voice quality, that is, both MSs (Mobile Stations, mobile stations) involved in a call use compatible voice codes, so that voice data does not need to be processed by a TC (Transcoder, transcoder) and can be transparently transmitted in an end-to-end manner, that is, a TrFO (Transcoder Free Operation, transcoder free operation) is implemented. It can be seen that a prerequisite to implementing the TrFO in the AoIP is that call parties use compatible voice codes.

Regarding a scenario in which an AMR (Adaptive Multi-Rate, adaptive multi-rate) full rate set and an AMR half rate set that are compatible are used to implement the TrFO, because an AMR rate set includes multiple rates, in the prior art, the MSs involved in a call determine a voice encoding rate to be used according to air interface quality. When the air interface quality is relatively good, a relatively high voice encoding rate may be selected; when the air interface quality is relatively poor, a relatively low voice encoding rate may be selected.

The prior art has at least the following disadvantages:
In the prior art, the MSs involved in a call determine a voice encoding rate to be used according to air interface quality. Therefore, in certain scenarios, a rate that exceeds a highest rate allowed by the peer end may be used because the air interface quality of one end in the call is good. As a result, a high-rate voice frame cannot be delivered to the peer end, and therefore silence is caused. For example, in a call handover scenario, call parties MS1 and MS2 use a full rate set to maintain a TrFO call before the call handover occurs. If compatible half rate set codes are used to maintain the TrFO call after the call handover occurs on the MS1, and the MS2 uses the highest encoding rate in the full rate set to perform voice encoding, the MS1 cannot receive a high-rate voice frame sent by the MS2 during the call handover, and therefore the silence is caused.

### SUMMARY OF THE INVENTION

To avoid silence caused by a failure in delivering a high-rate voice frame, embodiments of the present invention provide a method, a device, and a system for controlling a voice encoding rate. The technical solutions are as follows:

According to one aspect, a method for controlling a voice encoding rate is provided, including:
receiving a call pre-handover notification, where the call pre-handover notification carries a voice encoding type used by a local mobile station MS after a call handover; and
setting a rate adjustment indication according to the voice encoding type used by the local MS after the call handover, and sending the rate adjustment indication to a peer MS, so that the peer MS performs voice encoding according to the rate adjustment indication until the local MS completes the call handover.

According to another aspect, a device for controlling a voice encoding rate is provided, including:
a receiving module, configured to receive a call pre-handover notification, where the call pre-handover notification carries a voice encoding type used by a local mobile station MS after a call handover;
a setting module, configured to set a rate adjustment indication according to the voice encoding type used by the local MS after the call handover and received by the receiving module; and
a sending module, configured to send the rate adjustment indication set by the setting module to a peer MS, so that the peer MS performs voice encoding according to the rate adjustment indication until the local MS completes the call handover.

A method for controlling a voice encoding rate is further provided, including:
receiving a voice frame; and
modifying a rate adjustment indication carried in the voice frame to a default initial rate, and sending the voice frame that carries the default initial rate to a corresponding mobile station MS, so that the corresponding MS performs voice encoding according to the default initial rate.

A base station control device is further provided, including:
a receiving module, configured to receive a voice frame;
a modification module, configured to modify a rate adjustment indication carried in the voice frame received by the receiving module to a default initial rate; and
a sending module, configured to send the voice frame that carries the default initial rate after being modified by the modification module to a corresponding mobile station MS, so that the corresponding MS performs voice encoding according to the default initial rate.

A base transceiver station is further provided, including:
a receiving module, configured to receive a voice frame;
a modification module, configured to modify a rate adjustment indication carried in the voice frame received by the receiving module to a default initial rate; and
a sending module, configured to send the voice frame that carries the default initial rate after being modified by the modification module to a corresponding mobile station MS, so that the corresponding MS performs voice encoding according to the default initial rate.

A system for controlling a voice encoding rate is further provided, including a base station control device and a base transceiver station, where:
the base station control device is a foregoing base station control device; and the base transceiver station is a foregoing base transceiver station.

Beneficial effects of the technical solutions provided in the embodiments of the present invention are as follows:

A rate adjustment indication is set according to a voice encoding type used by a local MS after a call handover, and the rate adjustment indication is sent to a peer MS, so that the peer MS performs voice encoding according to the rate adjustment indication, thereby avoiding silence caused by a local MS's failure in receiving a high-rate voice frame sent by the peer MS in a short period of the call handover. In addition, the rate adjustment indication carried in a received voice frame is modified to a default initial rate, and the voice frame after modification is sent to a corresponding MS, so that the corresponding MS performs voice encoding according to the default initial rate, thereby further avoiding the silence problem caused by a failure in receiving the high-rate voice frame.

### BRIEF DESCRIPTION OF THE DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and persons of ordinary skill in the art may still derive other drawings from these accompanying drawings without creative efforts.
FIG. 1 is a flowchart of a method for controlling a voice encoding rate according to Embodiment 1 of the present invention;
FIG. 2 is a flowchart of a method for controlling a voice encoding rate according to Embodiment 2 of the present invention;
FIG. 3 is a schematic diagram of a call handover scenario according to Embodiment 3 of the present invention;
FIG. 4 is a schematic diagram of a message interaction in a call handover scenario according to Embodiment 3 of the present invention;
FIG. 5 is a flowchart of a method for controlling a voice encoding rate according to Embodiment 3 of the present invention;
FIG. 6 is a schematic diagram of another call handover scenario according to Embodiment 3 of the present invention;
FIG. 7 is a schematic diagram of a message interaction in another call handover scenario according to Embodiment 3 of the present invention;
FIG. 8 is a flowchart of another method for controlling a voice encoding rate according to Embodiment 3 of the present invention;
FIG. 9 is a schematic diagram of a call setup scenario according to Embodiment 3 of the present invention;
FIG. 10 is a flowchart of still another method for controlling a voice encoding rate according to Embodiment 3 of the present invention;
FIG. 11 is a schematic structural diagram of a device for controlling a voice encoding rate according to Embodiment 4 of the present invention;
FIG. 12 is a schematic structural diagram of a sending module according to Embodiment 4 of the present invention;
FIG. 13 is a schematic structural diagram of another device for controlling a voice encoding rate according to Embodiment 4 of the present invention;
FIG. 14 is a schematic structural diagram of a base station control device according to Embodiment 5 of the present invention;
FIG. 15 is a schematic structural diagram of a base transceiver station according to Embodiment 6 of the present invention;
FIG. 16 is a schematic structural diagram of another base transceiver station according to Embodiment 6 of the present invention; and
FIG. 17 is a schematic structural diagram of a system for controlling a voice encoding rate according to Embodiment 7 of the present invention.

### DETAILED DESCRIPTION OF THE EMBODIMENTS

To make the objectives, technical solutions, and advantages of the present invention more comprehensible, the following further describes the embodiments of the present invention in detail with reference to the accompanying drawings.

### Embodiment 1

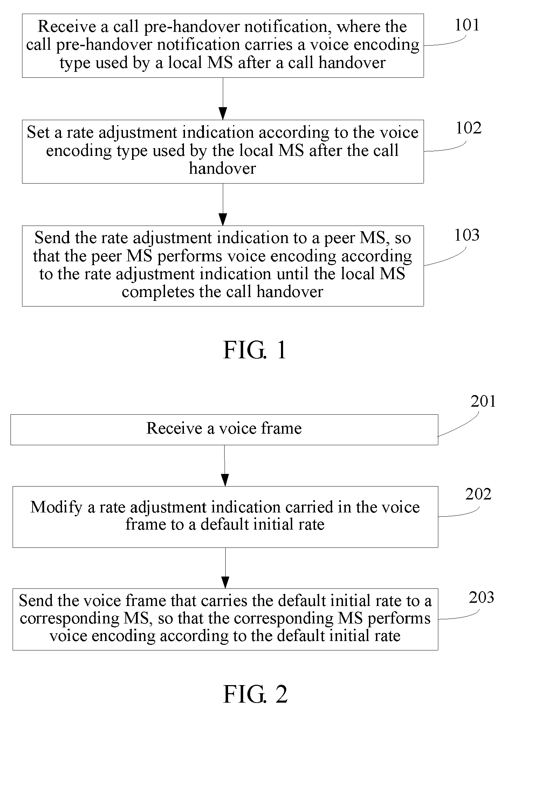

As shown in FIG. 1, this embodiment provides a method for controlling a voice encoding rate. A process of the method is specifically as follows:

101: Receive a call pre-handover notification, where the call pre-handover notification carries a voice encoding type used by a local MS after a call handover.

102: Set a rate adjustment indication according to the voice encoding type used by the local MS after the call handover.

103: Send the rate adjustment indication to a peer MS, so that the peer MS performs voice encoding according to the rate adjustment indication until the local MS completes the call handover.

Specifically, the setting, by a BTS (Base Transceiver Station, base transceiver station), a rate adjustment indication according to the voice encoding type used by the local MS after the call handover specifically includes:
determining, by the BTS, a default initial rate after the call handover according to the voice encoding type used by the local MS after the call handover, and using the default initial rate after the call handover as the rate adjustment indication.

The voice encoding type used by the local MS after the call handover provides an AMR rate set used by the local MS after the handover. Regarding the AMR rate set that includes multiple rates, a protocol defines the following methods for selecting an initial call rate:
If the rate set includes four rates, the initial call rate is a second lowest rate; and
if the rate set includes two or three rates, the initial call rate is a lowest rate.

In this embodiment, according to the methods defined in the protocol, the initial call rate may be taken as the default initial rate after the call handover. Certainly, another determining method may further be selected. The method for determining a default initial rate after the call handover and a determined specific value are not limited in this embodiment. This ensures that the local MS after the call handover is still capable of properly receiving a voice frame sent by the peer MS.

Further, the sending the rate adjustment indication to a peer MS specifically includes:
receiving, by the BTS, a voice frame sent to the peer MS by the local MS before the call handover, where the voice frame carries a rate adjustment indication that is determined by the local MS according to quality of a local air interface; and
modifying the rate adjustment indication carried in the voice frame to the rate adjustment indication set according to the voice encoding type used by the local MS after the call handover, sending the voice frame after modification to a peer control device, and sending, by the peer control device, the voice frame after modification to the peer MS.

Regarding a silence scenario in which the local MS does not send a voice frame to the peer MS before the call handover, the sending the rate adjustment indication to a peer MS specifically includes:
sending, by the BTS, a silence frame that carries the rate adjustment indication to the peer control device BTS if the BTS does not receive the voice frame sent to the peer MS by the local MS before the call handover within preset time, and sending, by the peer BTS after modifying the silence frame to a filled frame, the filled frame to the peer MS.

The silence frame may specifically be a No_Data frame, the filled frame may specifically be a SID_Filler frame, and the preset time involved in this embodiment and a subsequent embodiment can be set according to an actual condition. For example, the preset time is set to 20 milliseconds. A specific value of the preset time is not limited in this embodiment. That is to say, if the voice frame sent to the peer MS by the local MS before the call handover is not received within the preset time, the No_Data frame that carries the rate adjustment indication is sent to the peer control device. After modifying the received No_Data frame that carries the rate adjustment indication to the SID_Filler frame, the peer control device sends the SID_Filler frame to the peer MS, so that the peer MS performs voice encoding according to the rate adjustment indication carried in the SID_Filler frame, thereby implementing rate adjustment.

Optionally, before the setting a rate adjustment indication according to the voice encoding type used by the local MS after the call handover, the method further includes:
determining whether an interface bearing type used by the local MS after the call handover is IP bearing; and
if yes, performing the step of setting a rate adjustment indication according to the voice encoding type used by the local MS after the call handover.

It should be noted that both this embodiment and a subsequent embodiment take a call setup initiated by a local MS or a call handover performed by a local MS as an example to describe the method for controlling a voice encoding rate. In a practical application, it may also be that a peer MS initiates a call setup or performs a call handover. The implementation process is the same as the implementation process of a local MS. Therefore, details are not repeated herein.

According to the method provided in this embodiment, a rate adjustment indication is set according to a voice encoding type used by a local MS after a call handover, and the rate adjustment indication is sent to a peer MS, so that the peer MS performs voice encoding according to the rate adjustment indication; alternatively, before the peer MS answers a call, a rate adjustment indication in a voice frame delivered by a core network is modified to a local default initial rate, and the voice frame is sent to the local MS, so that the local MS performs voice encoding according to the local default initial rate. This avoids silence caused by a local MS's failure in receiving a high-rate voice frame sent by the peer MS or a peer MS's failure in receiving a high-rate voice frame, thereby ensuring a normal call between call parties.

### Embodiment 2

This embodiment provides a method for controlling a voice encoding rate. As shown in FIG. 2, a process of the method is specifically as follows:
201: Receive a voice frame.
202: Modify a rate adjustment indication carried in the voice frame to a default initial rate.
203: Send the voice frame that carries the default initial rate to a corresponding MS, so that the corresponding MS performs voice encoding according to the default initial rate.

Regarding a call setup scenario, the receiving a voice frame specifically includes:
receiving, by a BCS (Base Station Controller, base station controller) a voice frame delivered by a core network in a process of playing a ringback tone, where the voice frame carries a rate adjustment indication that is determined by the core network according to air interface quality of a calling MS; and
accordingly, the modifying a rate adjustment indication carried in the voice frame to a default initial rate and the sending the voice frame that carries the default initial rate to a corresponding mobile station MS specifically include:
   modifying, by the BCS, the rate adjustment indication carried in the voice frame delivered by the core network to a default initial rate of the calling MS, and sending the voice frame that carries the default initial rate of the calling MS to the calling MS, so that the calling MS performs voice encoding according to the default initial rate of the calling MS.

Regarding a call handover scenario, the receiving a voice frame specifically includes:
receiving, by a base transceiver station BTS, a voice frame sent to a peer MS by a local MS before a call handover, where the voice frame carries a rate adjustment indication that is determined by the local MS according to quality of a local air interface; and
accordingly, the modifying a rate adjustment indication carried in the voice frame to a default initial rate and the sending the voice frame that carries the default initial rate to a corresponding mobile station MS specifically include:
   modifying, by the BTS, the rate adjustment indication carried in the voice frame sent by the local MS to a default initial rate of the local MS after the call handover, and sending the voice frame that carries the default initial rate of the local MS after the call handover to the peer MS, so that the peer MS performs voice encoding according to the default initial rate of the local MS after the call handover.

Further, before the modifying, by the BTS, the rate adjustment indication carried in the voice frame sent by the local MS to a default initial rate of the local MS after the call handover, the method further includes:
receiving, by the BTS, a call pre-handover notification sent by a base station control device, where the call pre-handover notification carries a voice encoding type used by the local MS after the call handover; and
determining, by the BTS, the default initial rate of the local MS after the call handover according to the voice encoding type used by the local MS after the call handover; and
accordingly, the modifying, by the BTS, the rate adjustment indication carried in the voice frame sent by the local MS to a default initial rate of the local MS after the call handover specifically includes:
modifying the rate adjustment indication carried in the voice frame sent by the local MS to the default initial rate of the local MS after the call handover, where the default initial rate is determined according to the voice encoding type used by the local MS after the call handover.

According to the method provided in this embodiment, a rate adjustment indication carried in a received voice frame is modified to a default initial rate, and the voice frame after modification is sent to a corresponding MS, so that the corresponding MS performs voice encoding according to the default initial rate, thereby avoiding silence caused by an MS's failure in receiving a high-rate voice frame in a call setup or call handover process.

### Embodiment 3

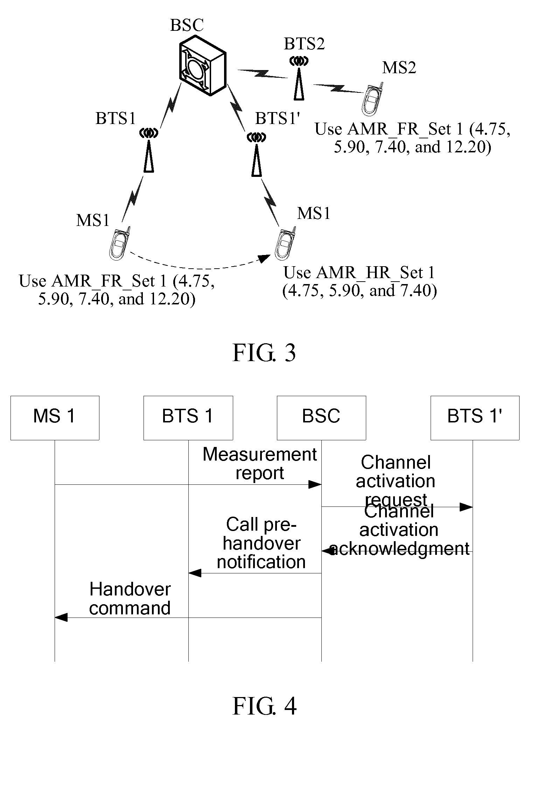

This embodiment provides a method for controlling a voice encoding rate. For ease of description, this embodiment firstly takes an intra-BSC call handover scenario shown in FIG. 3 as an example and combines a message interaction process shown in FIG. 4 to describe in detail the method for controlling a voice encoding rate provided in this embodiment.

In FIG. 3, call parties, that is, an MS1 and an MS2, are in a same BSC. Before a handover, both the MS1 and the MS2 use a full rate set AMR_FR Set1 (12.2 kpbs, 7.4 kpbs, 5.9 kpbs, and 4.95 kpbs) to set up a TrFO call. Subsequently, after the intra-BSC call handover occurs on MS1, compatible half rate set AMR_HR Set1 (7.4 kpbs, 5.9 kpbs, and 4.95 kpbs) codes are used to maintain the TrFO call. If the MS2 uses an encoding rate 12.2 kpbs during the call handover, regarding the MS1 whose highest voice encoding rate is only 7.40 kpbs after the call handover, a high-rate voice frame sent by the MS2 cannot be received after the handover to a new channel, which results in short-period silence after the handover. The silence state continues until the MS 1 completes the handover. The MS1 sends a rate adjustment indication CMR (Code Mode Request, code mode request) to the MS2 to instruct the MS2 to reduce the encoding rate. After the MS2 reduces the voice rate to less than 12.2 kbps, the MS1 is capable of receiving a voice frame from the MS2.

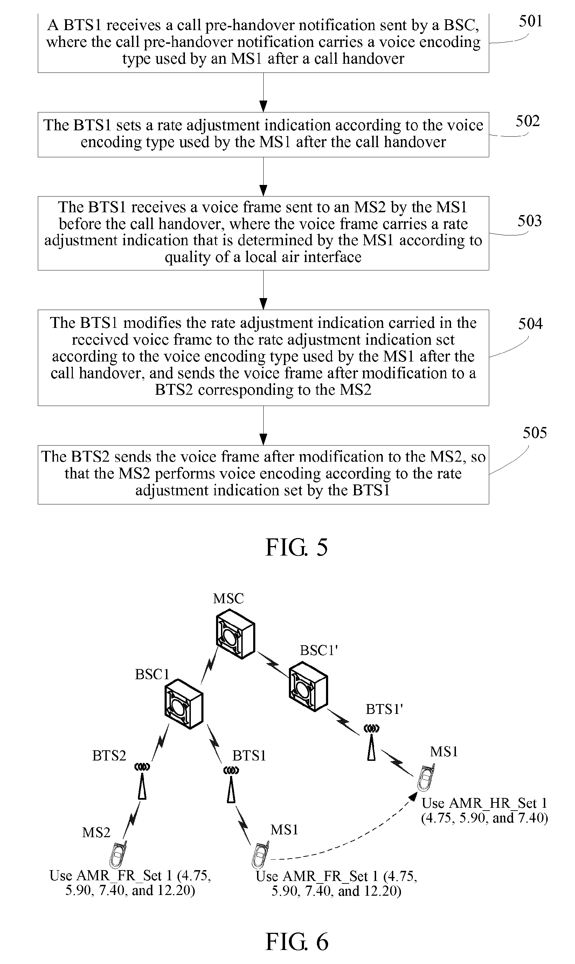

Regarding this situation, to avoid that silence occurs because the MS1 cannot receive the high-rate voice frame sent by the MS2 during the intra-BSC handover, this embodiment provides a method for controlling a voice encoding rate. As shown in FIG. 5, a process of the method provided in this embodiment is specifically as follows:
501: A BTS1 receives a call pre-handover notification sent by the BSC, where the call pre-handover notification carries a voice encoding type used by the MS1 after the call handover.

Regarding this step and in combination with FIG. 4, after the BSC receives a measurement report Measurement Report sent by the MS1, the BSC is capable of determining voice encoding types used by the MS1 before and after the call handover because the call handover occurs in the BSC. Regarding this embodiment, the voice encoding types used by the MS1 before and after the call handover are handed over from a full rate to a half rate, and the BSC determines that a handover between an AMR full rate and an AMR half rate occurs on the MS1 before and after the call handover and the voice encoding types used by the MS1 before and after the call handover are compatible. In this case, the call pre-handover notification Pre-Handover Notification is used to inform the BTS1 that a call handover will occur on the MS 1. To allow the BTS1 to determine the voice encoding rate used by the MS1 after the call handover, the BSC carries the voice encoding type used by the MS1 after the call handover in the Pre-Handover Notification, sends the Pre-Handover Notification to the BTS1, and delivers a handover command Handover Command/an assignment command Assignment Command to the MS1.

502: The BTS1 sets a rate adjustment indication according to the voice encoding type used by the MS 1 after the call handover.

Specifically, the method that the BTS1 sets a rate adjustment indication according to the voice encoding type used by the MS1 after the call handover is not specifically limited in this embodiment. According to the method for setting a rate adjustment indication described in Embodiment 1, because the voice encoding type used by the MS1 after the call handover is AMR_HR Set1 (7.4 kpbs, 5.9 kpbs, and 4.95 kpbs), the rate adjustment indication set by the BTS1 should be the lowest rate 4.95 kpbs among the three rates.

503: The BTS1 receives a voice frame sent to the MS2 by the MS1 before the call handover, where the voice frame carries a rate adjustment indication that is determined by the MS1 according to quality of a local air interface.

A sequence of step 503 and step 502 is not limited in this embodiment. In a practical application, the BTS1 may further firstly receive the voice frame sent to the MS2 by the MS1 before the call handover, and then sets the rate adjustment indication according to the voice encoding type used by the MS 1 after the call handover.

504: The BTS1 modifies the rate adjustment indication carried in the received voice frame to the rate adjustment indication set according to the voice encoding type used by the MS1 after the call handover, and sends the voice frame after modification to a BTS2 corresponding to the MS2.

505: The BTS2 sends the voice frame after modification to the MS2, so that the MS2 performs voice encoding according to the rate adjustment indication set by the BTS 1.

Regarding step 504 and step 505, because the BTS1 modifies, in step 504, the rate adjustment indication in the voice frame sent to the MS2 by the MS1 before the call handover to the rate adjustment indication set by the BTS1 in step 502, and the latter rate adjustment indication is a default initial rate after the call handover, the BTS2 sends the voice frame after modification to the MS2 in step 505, so that the MS2 performs voice encoding according to the rate adjustment indication set by the BTS1. Even if the MS1 uses a half rate after the call handover, the MS1 is still capable of properly receiving the voice frame encoded by the MS2 according to the default initial rate after the call handover, thereby avoiding that short-period silence occurs on the MS1 during the call handover, and further improving an anti-interference capability. However, compared with the highest encoding rate 12.2 kpbs used by the MS2, the default initial rate after the call handover is relatively low. Therefore, after the MS1 completes the call handover, an encoding rate may further be changed from the default initial rate after the call handover to a higher encoding rate through an autonomous rate adjustment between the MS1 and the MS2, thereby improving voice quality. For example, the encoding rate of the MS1 is changed to the highest encoding rate 7.4 kpbs after the call handover.

Then, to introduce the method provided in this embodiment more comprehensively, this embodiment takes an inter-BSC call handover scenario shown in FIG. 6 as an example to further describe in detail the method for controlling a voice encoding rate provided in this embodiment.

In FIG. 6, call parties, that is, an MS1 and an MS2, are in a same BSC1. Both the MS1 and the MS2 use an AMR_FR Set1 to set up a TrFO call. Subsequently, after an inter-BSC handover (a handover from the BSC1 to a BSC1') occurs on the MS1, compatible AMR_HR Set1 codes are used to maintain the TrFO call. If the MS2 uses an encoding rate 12.2 kpbs during the call handover, regarding the MS1 whose highest voice encoding rate is only 7.40 kpbs after the call handover, a high-rate voice frame sent by the MS2 cannot be received after the handover to a new channel, which results in short-period silence after the handover. The silence state continues until the MS1 completes the handover. A CMR is used to instruct the MS2 to reduce an encoding rate. After the MS2 reduces the voice rate to less than 12.2 kbps, the MS1 is capable of receiving a voice frame from the MS2.

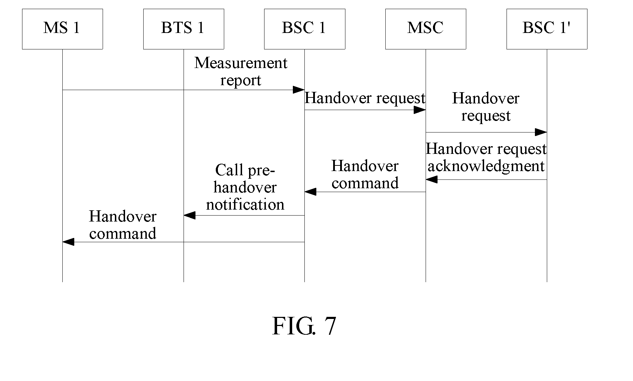

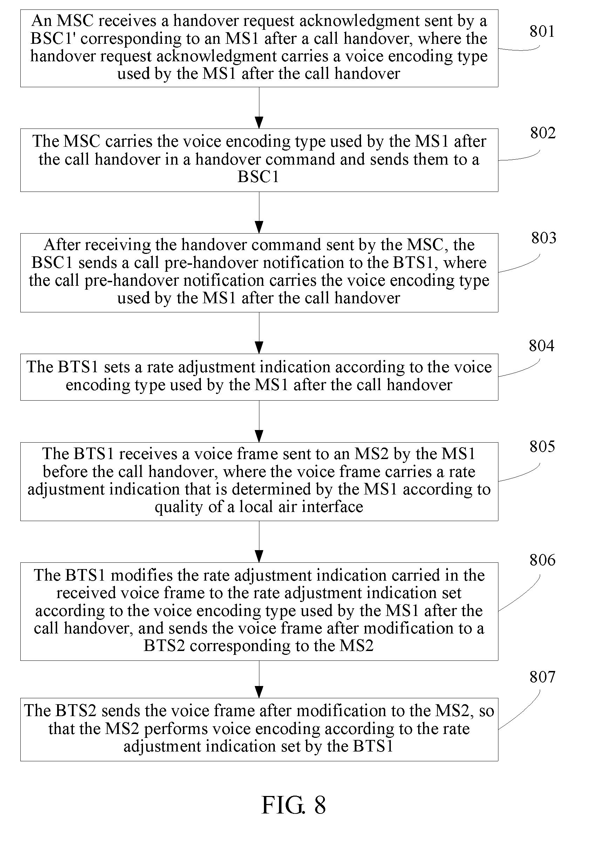

Regarding this situation, to avoid that silence occurs because the MS1 cannot receive a high-rate voice frame sent by the MS2 during the inter-BSC handover, according to the method provided in this embodiment in combination with a message interaction process shown in FIG. 7, a message during the inter-BSC call handover is extended, so that the BSC1' corresponding to the MS1 after the call handover notifies the BSC1 of a voice encoding type used by the MS1 after the call handover, thereby controlling the voice encoding rate. As shown in FIG. 8, a process of the method for controlling a voice encoding rate provided in this embodiment is specifically as follows:

801: An MSC (Mobile Switching Center, mobile switching center) receives a handover request acknowledgment sent by the BSC1' corresponding to the MS1 after the call handover, where the handover request acknowledgment carries a voice encoding type used by the MS1 after the call handover.

Specifically, the call handover occurs between the BSCs, and the BSC1 corresponding to the MS1 on which the call handover occurs does not determine a voice encoding type used by the MS1 after the call handover in advance. Therefore, when the method provided in this embodiment is specifically implemented, the BSC1' carries the voice encoding type used by the MS1 after the call handover in a handover request acknowledgment HANDOVER REQUEST ACKNOWLEGE and sends the HANDOVER REQUEST ACKNOWLEGE to a corresponding MSC, so that after receiving the HANDOVER REQUEST ACKNOWLEGE sent by the BSC1', the MSC learns the voice encoding type Codec used by the MS1 after the call handover.

802: The MSC carries the voice encoding type used by the MS1 after the call handover in a handover command and sends them to the BSC1.

Regarding this step, the MSC sends the handover command HANDOVER COMMAND to the BSC1, and indication information about the encoding type used by the MS1 after the call handover is added into the HANDOVER COMMAND, so that the BSC1 is capable of learning the voice encoding type used by the MS 1 after the call handover. In this embodiment, the method for adding indication information about the encoding type used by the MS1 after the call handover into the HANDOVER COMMAND is not limited. For example, in a HANDOVER COMMAND message of an existing interface A, a New BSS to Old BSS Information cell may be extended and a Speech Codec (Chosen) field may be added so as to indicate a codec type used by the MS 1 after the call handover.

803: After receiving the handover command sent by the MSC, the BSC1 sends a call pre-handover notification to the BTS1, where the call pre-handover notification carries the voice encoding type used by the MS 1 after the call handover.

After the BSC1 receives the HANDOVER COMMAND sent by the MSC, if the MS1 uses a full rate AMR code before the call handover, the BSC1 is capable of learning that the MS1 uses, after the call handover, a half rate channel that is compatible with an AMR rate set before the handover. When the BSC1 triggers the BTS1 to send a voice frame to the peer MS2 by carrying the voice encoding type used by the MS1 after the call handover in the Pre-Handover Notification and sending the Pre-Handover Notification to the BTS1, a rate adjustment indication in the voice frame is set to a default initial rate after the call handover, and then the BCS1 delivers a Handover Command/an Assignment Command to the MS 1.

Optionally, the BSC1' may further carry an interface bearing type in the HANDOVER REQUEST ACKNOWLEGE sent to the MSC. In this case, the BSC1 needs to determine whether interface bearing types of the MS1 before and after the call handover are IP bearing and then delivers the Pre-Handover Notification to the BTS 1 after determining that IP bearing is used after the handover. Certainly, the BSC1 may also skip the determining step, which is not specifically limited in this embodiment.

804: The BTS1 sets a rate adjustment indication according to the voice encoding type used by the MS 1 after the call handover and carried in the call pre-handover notification.

805: The BTS1 receives a voice frame sent to the MS2 by the MS1 before the call handover, where the voice frame carries a rate adjustment indication that is determined by the MS1 according to quality of a local air interface.

806: The BTS1 modifies the rate adjustment indication carried in the received voice frame to the rate adjustment indication set according to the voice encoding type used by the MS1 after the call handover, and sends the voice frame after modification to a BTS2 corresponding to the MS2.

807: The BTS2 sends the voice frame after modification to the MS2, so that the MS2 performs voice encoding according to the rate adjustment indication set by the BTS 1.

Specifically, step 804 to step 807 are the same as step 502 to step 505. Therefore, details are not repeated in this embodiment. It should be noted that the inter-BSC call handover shown in FIG. 8 is a call handover performed in a same MSC. Regarding a call handover scenario between different MSCs, the method provided in this embodiment is also applicable, and an implementation principle is the same as the principle of the inter-BSC call handover shown in FIG. 8. Therefore, details are not repeated herein.

Optionally, no matter whether the call handover occurs in a BSC or between BSCs, if the MS1 on which the call handover will occur does not send a voice frame to the MS2 before the call handover, that is, in a scenario where DTX (Discontinuous transmission, discontinuous transmission) is enabled, after the BTS1 sets the rate adjustment indication according to the voice encoding type used by the MS1 after the call handover, the BTS1 uses a method different from step 504 or step 804 to send the set rate adjustment indication to the MS2. During a specific implementation, the BTS1 carries the rate adjustment indication set by itself in a No_Data frame and sends the No_Data frame to the BTS2 corresponding to the MS2. After converting the No_Data frame into a SID_Filler frame, the BTS2 sends the SID_Filler frame to the MS2, so that the MS2 is also capable of performing voice encoding according to the rate adjustment indication set by the BTS1, thereby achieving the objective of rate adjustment.

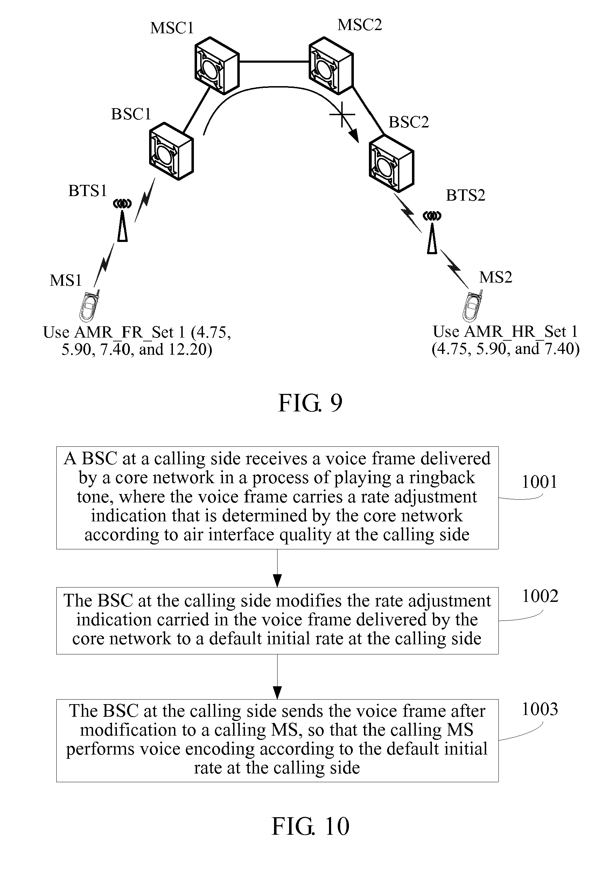

In addition, no matter whether the call parties are located in a same BSC, in different BSCs of a same MSC, or in different MSCs, when the call parties set up a call, if the called end does not answer the call, a core network is triggered to play a ringback tone to the calling end. A call setup scenario shown in FIG. 9 is taken as an example. Before a called MS2 answers a call, a core network plays a ringback tone to a calling MS1. The MS1 uses a highest voice encoding rate 12.2 kbps because the air interface quality is relatively good. After the MS2 answers, a 12.2 kbps voice frame from the MS1 cannot be delivered to the MS2 through a half rate air interface channel, which results in loss of some high-rate voice frames. Until a called user answers, and a voice frame from the MS2 carries a rate adjustment indication, which requires the calling MS1 to adjust the rate to less than 12.2 kbps, the voice frame of a calling user can be received by the called user.

Regarding this situation, to avoid that silence occurs because the MS2 cannot receive a high-rate voice frame sent by the MS1 during call setup, as shown in FIG. 10, the method provided in this embodiment further includes:

1001: Before a called MS answers a call, a BSC at a calling side receives a voice frame delivered by a core network in a process of playing a ringback tone, where the voice frame carries a rate adjustment indication that is determined by the core network according to air interface quality at the calling side.

Regarding this step, even if the air interface quality at the calling side is good, and the rate adjustment indication carried in the voice frame delivered by the core network is a higher voice encoding rate, the called MS is also capable of receiving a voice frame sent by a calling MS after the BSC at the calling side modifies the rate adjustment indication in the voice frame delivered by the core network in a subsequent step.

1002: The BSC at the calling side modifies the rate adjustment indication carried in the voice frame delivered by the core network to a default initial rate at the calling side.

Specifically, the method for determining a default initial rate provided in Embodiment 1 may also be used as a method for determining the default initial rate at the calling side in this step, which is not specifically limited in this embodiment.

1003: The BSC at the calling side sends the voice frame after modification to the calling MS, so that the calling MS performs voice encoding according to the default initial rate at the calling side.

For example, in FIG. 9, before the MS2 that serves as a called party answers a call, a BSC1 at the calling side receives a voice frame delivered by the core network, that is, an MSC1, in a process of playing a ringback tone, where the voice frame carries a rate adjustment indication that is determined by the MSC1 according to the air interface quality at the calling side; and the BSC1 modifies the rate adjustment indication carried in the received voice frame delivered by the MSC1 to a local default initial rate and sends the voice frame after modification to a BTS1. Then, the BTS1 sends the voice frame after modification to the MS1, so that the MS1 performs voice encoding according to the local default initial rate. Because a default initial rate at a calling side where the MS1 is located is not higher than an encoding rate used by the MS2, the MS2 is capable of successfully receiving a voice frame sent by the MS1, thereby avoiding silence that occurs in a call setup process.

It should be noted that because a rate adjustment indication carried in a voice frame delivered by a core network is determined according to air interface quality at a calling side, as the air interface quality at the calling side varies, the rate adjustment indication carried in the voice frame delivered by the core network is variable. In addition, the core network may further select a fixed rate adjustment indication carried in the voice frame. For example, the core network sets the rate adjustment indication carried in the delivered voice frame to a default initial rate at the calling side. Regarding this situation, after the calling side determines that the rate adjustment indication carried in the voice frame delivered by the core network is a local default initial rate, the voice frame delivered by the core network does not need to be modified, and the objective that a calling MS performs voice encoding according to the local default initial rate can also be achieved. A rate adjustment indication type specifically carried in the voice frame delivered by the core network is not limited in this embodiment.

According to the method provided in this embodiment, a rate adjustment indication is set according to a voice encoding type used by a local MS after a call handover, and the rate adjustment indication is sent to a peer MS, so that the peer MS performs voice encoding according to the rate adjustment indication; alternatively, before the peer MS answers a call, a rate adjustment indication in a voice frame delivered by a core network is modified to a local default initial rate, and the voice frame is sent to the local MS, so that the local MS performs voice encoding according to the local default initial rate. This avoids silence caused by a local MS's failure in receiving a high-rate voice frame sent by the peer MS or a peer MS's failure in receiving a high-rate voice frame, thereby ensuring a normal call between call parties.

### Embodiment 4

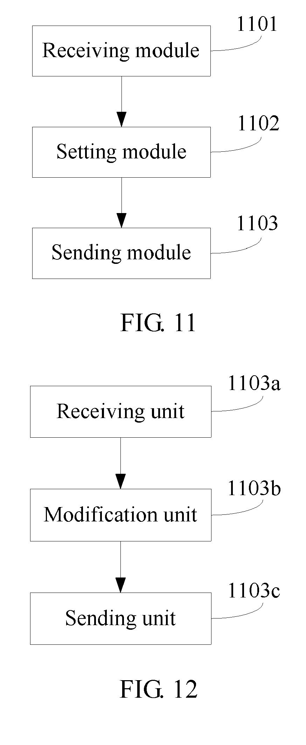

As shown in FIG. 11, this embodiment provides a device for controlling a voice encoding rate, where the device is configured to perform the method steps that are performed by a BTS device in Embodiment 1 and Embodiment 3. The device includes:
a receiving module 1101, configured to receive a call pre-handover notification, where the call pre-handover notification carries a voice encoding type used by a local mobile station MS after a call handover;
a setting module 1102, configured to set a rate adjustment indication according to the voice encoding type used by the local MS after the call handover and received by the receiving module 1101; and
a sending module 1103, configured to send the rate adjustment indication set by the setting module 1102 to a peer MS, so that the peer MS performs voice encoding according to the rate adjustment indication until the local MS completes the call handover.

The setting module 1102 is specifically configured to determine a default initial rate after the call handover according to the voice encoding type used by the local MS after the call handover, and take the default initial rate after the call handover as the rate adjustment indication. For details about how to determine the default initial rate after the call handover, reference may be made to related descriptions in Embodiment 1 and in step 502 of Embodiment 3. Therefore, details are not repeated herein.

As shown in FIG. 12, the sending module 1103 specifically includes:
a receiving unit 1103a, configured to receive a voice frame sent to the peer MS by the local MS before the call handover, where the voice frame carries a rate adjustment indication that is determined by the local MS according to quality of a local air interface;
a modification unit 1103b, configured to modify the rate adjustment indication carried in the voice frame received by the receiving unit 1103a to the rate adjustment indication set according to the voice encoding type used by the local MS after the call handover; and
a sending unit 1103c, configured to send the voice frame after modification made by the modification unit 1103b to a peer control device, and the peer control device sends the voice frame after modification to the peer MS.

Optionally, regarding a silence scenario, the sending module 1103 is specifically configured to send a silence frame that carries a rate adjustment indication to the peer control device if the voice frame sent to the peer MS by the local MS before the call handover is not received within preset time, and the peer control device sends, after modifying the silence frame to a filled frame, the filled frame to the peer MS.

The silence frame may specifically be a No_Data frame, the filled frame may specifically be a SID_Filler frame, and the preset time involved in this embodiment and a subsequent embodiment can be set according to an actual condition. For example, the preset time is set to 20 milliseconds. A specific value of the preset time is not limited in this embodiment. That is to say, if the voice frame sent to the peer MS by the local MS before the call handover is not received within the preset time, the No_Data frame that carries the rate adjustment indication is sent to the peer control device. After modifying the received No_Data frame that carries the rate adjustment indication to the SID_Filler frame, the peer control device sends the SID_Filler frame to the peer MS, so that the peer MS performs voice encoding according to the rate adjustment indication carried in the SID_Filler frame, thereby implementing rate adjustment.

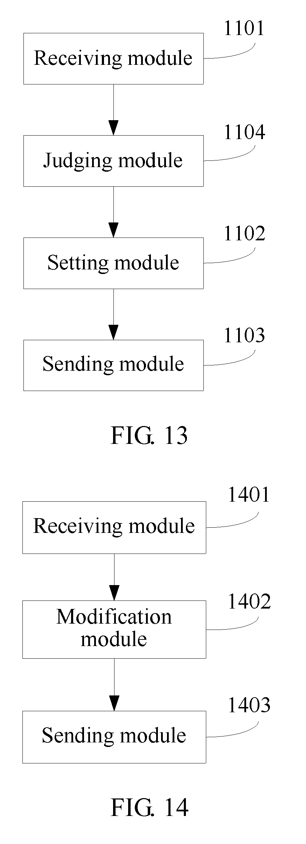

Optionally, as shown in FIG. 13, the device further includes:
a judging module 1104, configured to determine whether interface bearing types used by a local MS before and after a call handover are IP bearing; and
a setting module 1102, configured to perform the step of setting a rate adjustment indication according to a voice encoding type used by the local MS after the call handover after the judging module 1104 determines that the interface bearing used by the local MS after the call handover is the IP bearing.

The device provided in this embodiment sets a rate adjustment indication according to a voice encoding type used by a local MS after a call handover, and sends the rate adjustment indication to a peer MS, so that the peer MS performs voice encoding according to the rate adjustment indication; alternatively, the device modifies a rate adjustment indication in a voice frame delivered by a core network to a local default initial rate and sends the voice frame to the local MS before the peer MS answers a call, so that the local MS performs voice encoding according to the local default initial rate. This avoids silence caused by a local MS's failure in receiving a high-rate voice frame sent by the peer MS or a peer MS's failure in receiving a high-rate voice frame, thereby ensuring a normal call between call parties.

### Embodiment 5

This embodiment provides a base station control device, where the device is configured to perform the method steps that are performed by a BSC in Embodiment 2 and Embodiment 3. As shown in FIG. 14, the device includes:
a receiving module 1401, configured to receive a voice frame;
a modification module 1402, configured to modify a rate adjustment indication carried in the voice frame received by the receiving module 1401 to a default initial rate; and
a sending module 1403, configured to send the voice frame that carries the default initial rate after being modified by the modification module 1402 to a corresponding mobile station MS, so that the corresponding MS performs voice encoding according to the default initial rate.

The receiving module 1401 is specifically configured to receive a voice frame delivered by a core network in a process of playing a ringback tone, where the voice frame carries a rate adjustment indication that is determined by the core network according to air interface quality of a calling MS.

Accordingly, the modification module 1402 is specifically configured to modify the rate adjustment indication carried in the voice frame that is delivered by the core network and received by the receiving module 1401 to a default initial rate of the calling MS.

The sending module 1403 is specifically configured to send the voice frame that carries the default initial rate of the calling MS after being modified by the modification module 1402 to the calling MS, so that the calling MS performs voice encoding according to the default initial rate of the calling MS.

The base station control device provided in this embodiment modifies a rate adjustment indication carried in a received voice frame delivered by a core network to a default initial rate of a calling MS and sends the voice frame after modification to the calling MS, so that the calling MS performs voice encoding according to the default initial rate, thereby avoiding silence caused by a called MS's failure in receiving a high-rate voice frame sent by the calling MS in a call setup process.

### Embodiment 6

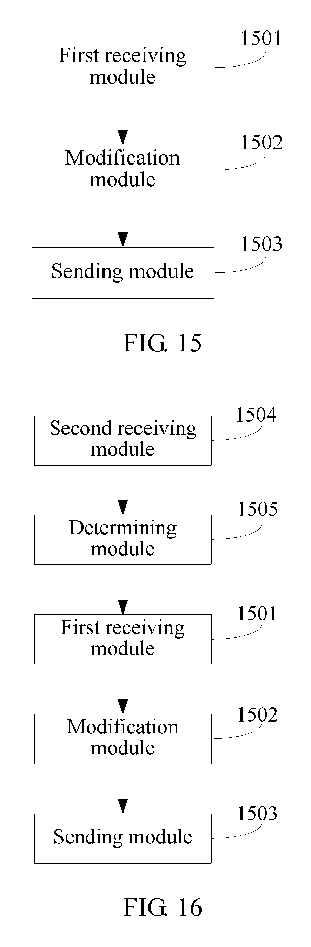

This embodiment provides a base transceiver station, where the base transceiver station is configured to perform the method steps that are performed by a BTS in Embodiment 2 and Embodiment 3. As shown in FIG. 15, the base transceiver station includes:
a first receiving module 1501, configured to receive a voice frame;
a modification module 1502, configured to modify a rate adjustment indication carried in the voice frame received by the first receiving module 1501 to a default initial rate; and
a sending module 1503, configured to send the voice frame that carries the default initial rate after being modified by the modification module 1502 to a corresponding mobile station MS, so that the corresponding MS performs voice encoding according to the default initial rate.

The first receiving module 1501 is specifically configured to receive a voice frame sent to a peer MS by a local MS before a call handover, where the voice frame carries a rate adjustment indication that is determined by the local MS according to quality of a local air interface.

Accordingly, the modification module 1502 is specifically configured to modify the rate adjustment indication carried in the voice frame that is sent by the local MS and received by the first receiving module 1501 to a default initial rate of the local MS after the call handover.

The sending module 1503 is specifically configured to send the voice frame that carries the default initial rate of the local MS after the call handover after being modified by the modification module 1502 to the peer MS, so that the peer MS performs voice encoding according to the default initial rate of the local MS after the call handover.

Further, as shown in FIG. 16, the base transceiver station further includes:
a second receiving module 1504, configured to receive a call pre-handover notification sent by a base station control device, where the call pre-handover notification carries a voice encoding type used by the local MS after the call handover; and
a determining module 1505, configured to determine the default initial rate of the local MS after the call handover according to the voice encoding type used by the local MS after the call handover and received by the second receiving module 1504.

Accordingly, the modification module 1502 is specifically configured to modify the rate adjustment indication carried in the voice frame that is sent by the local MS and received by the first receiving module 1501 to the default initial rate of the local MS after the call handover, where the default initial rate is determined by the determining module 1505.

The base transceiver station provided in this embodiment, after receiving a call pre-handover notification sent by a base station control device, modifies a rate adjustment indication carried in a received voice frame sent by a local MS to a default initial rate of the local MS after a call handover, and sends the voice frame after modification to a peer MS, so that the peer MS performs voice encoding according to the default initial rate of the local MS after the call handover, thereby avoiding silence caused by a local MS's failure in receiving a high-rate voice frame sent by the peer MS in a call handover process.

### Embodiment 7

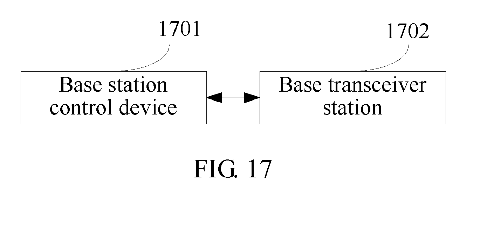

This embodiment provides a system for controlling a voice encoding rate. As shown in FIG. 17, the system includes a base station control device 1701 and a base transceiver station 1702.

The base station control device 1701 is a base station control device according to Embodiment 5, and the base transceiver station 1702 is a base transceiver station according to Embodiment 6.

The system provided in this embodiment modifies, by using the base station control device or the base transceiver station, a rate adjustment indication carried in a received voice frame to a default initial rate, and sends the voice frame after modification to a corresponding MS, so that the corresponding MS performs voice encoding according to the default initial rate, thereby avoiding silence caused by an MS's failure in receiving a high-rate voice frame in a call setup or call handover process.

It should be noted that when the device for controlling a voice encoding rate, the base station control device, and the base transceiver station provided in the foregoing embodiments control voice encoding rates, division of the foregoing functional modules is merely taken as an example for description. In a practical application, the foregoing functions may be assigned to different functional modules for implementation as required. That is, a device is divided into different functional modules for performing all or part of the functions described above. In addition, the device for controlling a voice encoding rate, the base station control device, the base transceiver station, and the system for controlling a voice encoding rate provided in the foregoing embodiments and the method embodiments for controlling a voice encoding rate are a same concept. For their specific implementation procedures, refer to the method embodiments. Details are not repeated herein.

Serial numbers of the foregoing embodiments of the present invention are only used for description, but do not indicate preference of the embodiments.

All or part of the steps according to the embodiments of the present invention may be implemented by using software, and a corresponding software program may be stored in a readable storage medium, such as an optical disk or a hard disk.

The foregoing descriptions are merely exemplary embodiments of the present invention, but are not intended to limit the present invention. Any modification, equivalent replacement, or improvement derived within the spirit and principle of the present invention shall fall within the protection scope of the present invention.

## Claims

1. A method for controlling a voice encoding rate, comprising:
receiving a call pre-handover notification, wherein the call pre-handover notification carries a voice encoding type used by a local mobile station MS after a call handover; and
setting a rate adjustment indication according to the voice encoding type used by the local MS after the call handover, and sending the rate adjustment indication to a peer MS, so that the peer MS performs voice encoding according to the rate adjustment indication until the local MS completes the call handover.

2. The method according to claim 1, wherein the setting a rate adjustment indication according to the voice encoding type used by the local MS after the call handover specifically comprises:
determining a default initial rate after the call handover according to the voice encoding type used by the local MS after the call handover, and using the default initial rate after the call handover as the rate adjustment indication.

3. The method according to claim 1, wherein the sending the rate adjustment indication to a peer MS specifically comprises:
receiving a voice frame sent to the peer MS by the local MS before the call handover, wherein the voice frame carries a rate adjustment indication that is determined by the local MS according to quality of a local air interface; and
modifying the rate adjustment indication carried in the voice frame to the rate adjustment indication set according to the voice encoding type used by the local MS after the call handover, sending the voice frame after modification to a peer control device, and sending, by the peer control device, the voice frame after modification to the peer MS.

4. The method according to claim 1, wherein the sending the rate adjustment indication to a peer MS specifically comprises:
sending a silence frame that carries the rate adjustment indication to a peer control device if a voice frame sent to the peer MS by the local MS before the call handover is not received within preset time, and sending, by the peer control device after modifying the silence frame to a filled frame, the filled frame to the peer MS.

5. The method according to any one of claims 1 to 4, before the setting a rate adjustment indication according to the voice encoding type used by the local MS after the call handover, further comprising:
determining whether an interface bearing type used by the local MS after the call handover is Internet Protocol IP bearing; and
if yes, performing the step of setting a rate adjustment indication according to the voice encoding type used by the local MS after the call handover.

6. A device for controlling a voice encoding rate, comprising:
a receiving module, configured to receive a call pre-handover notification, wherein the call pre-handover notification carries a voice encoding type used by a local mobile station MS after a call handover;
a setting module, configured to set a rate adjustment indication according to the voice encoding type used by the local MS after the call handover and received by the receiving module; and
a sending module, configured to send the rate adjustment indication set by the setting module to a peer MS, so that the peer MS performs voice encoding according to the rate adjustment indication until the local MS completes the call handover.

7. The device according to claim 6, wherein the setting module is specifically configured to determine a default initial rate after the call handover according to the voice encoding type used by the local MS after the call handover, and use the default initial rate after the call handover as the rate adjustment indication.

8. The device according to claim 6, wherein the sending module specifically comprises:
a receiving unit, configured to receive a voice frame sent to the peer MS by the local MS before the call handover, wherein the voice frame carries a rate adjustment indication that is determined by the local MS according to quality of a local air interface;
a modification unit, configured to modify the rate adjustment indication carried in the voice frame received by the receiving unit to the rate adjustment indication set according to the voice encoding type used by the local MS after the call handover; and
a sending unit, configured to send the voice frame after modification made by the modification unit to a peer control device, wherein the voice frame after modification is sent to the peer MS by the peer control device.

9. The device according to claim 6, wherein the sending module is specifically configured to send a silence frame that carries the rate adjustment indication to a peer control device if a voice frame sent to the peer MS by the local MS before the call handover is not received within preset time, and the peer control device sends, after modifying the silence frame to a filled frame, the filled frame to the peer MS.

10. The device according to any one of claims 6 to 9, further comprising:
a judging module, configured to determine whether an interface bearing type used by the local MS after the call handover is Internet Protocol IP bearing; and
the setting module, configured to perform the step of setting a rate adjustment indication according to the voice encoding type used by the local MS after the call handover after the judging module determines that the interface bearing used by the local MS after the call handover is the IP bearing.

11. A method for controlling a voice encoding rate, comprising:
receiving a voice frame; and
modifying a rate adjustment indication carried in the voice frame to a default initial rate, and sending the voice frame that carries the default initial rate to a corresponding mobile station MS, so that the corresponding MS performs voice encoding according to the default initial rate.

12. The method according to claim 11, wherein the receiving a voice frame specifically comprises:
receiving, by a base station control device BCS, a voice frame delivered by a core network in a process of playing a ringback tone, wherein the voice frame carries a rate adjustment indication that is determined by the core network according to air interface quality of a calling MS; and
accordingly, the modifying a rate adjustment indication carried in the voice frame to a default initial rate and the sending the voice frame that carries the default initial rate to a corresponding mobile station MS specifically comprise:
modifying, by the BCS, the rate adjustment indication carried in the voice frame delivered by the core network to a default initial rate of the calling MS, and sending the voice frame that carries the default initial rate of the calling MS to the calling MS, so that the calling MS performs voice encoding according to the default initial rate of the calling MS.

13. The method according to claim 11, wherein the receiving a voice frame specifically comprises:
receiving, by a base transceiver station BTS, a voice frame sent to a peer MS by a local MS before a call handover, wherein the voice frame carries a rate adjustment indication that is determined by the local MS according to quality of a local air interface; and
accordingly, the modifying a rate adjustment indication carried in the voice frame to a default initial rate and the sending the voice frame that carries the default initial rate to a corresponding mobile station MS specifically comprise:
modifying, by the BTS, the rate adjustment indication carried in the voice frame sent by the local MS to a default initial rate of the local MS after the call handover, and sending the voice frame that carries the default initial rate of the local MS after the call handover to the peer MS, so that the peer MS performs voice encoding according to the default initial rate of the local MS after the call handover.

14. The method according to claim 13, before the modifying, by the BTS, the rate adjustment indication carried in the voice frame sent by the local MS to a default initial rate of the local MS after the call handover, further comprising:
receiving, by the BTS, a call pre-handover notification sent by a base station control device, wherein the call pre-handover notification carries a voice encoding type used by the local MS after the call handover; and
determining, by the BTS, the default initial rate of the local MS after the call handover according to the voice encoding type used by the local MS after the call handover; and
accordingly, the modifying, by the BTS, the rate adjustment indication carried in the voice frame sent by the local MS to a default initial rate of the local MS after the call handover specifically comprises:
modifying the rate adjustment indication carried in the voice frame sent by the local MS to the default initial rate of the local MS after the call handover, wherein the default initial rate is determined according to the voice encoding type used by the local MS after the call handover.

15. A base station control device, comprising:
a receiving module, configured to receive a voice frame;
a modification module, configured to modify a rate adjustment indication carried in the voice frame received by the receiving module to a default initial rate; and
a sending module, configured to send the voice frame that carries the default initial rate after being modified by the modification module to a corresponding mobile station MS, so that the corresponding MS performs voice encoding according to the default initial rate.

16. The device according to claim 15, wherein the receiving module is specifically configured to receive a voice frame delivered by a core network in a process of playing a ringback tone, and the voice frame carries a rate adjustment indication that is determined by the core network according to air interface quality of a calling MS;
accordingly, the modification module is specifically configured to modify the rate adjustment indication carried in the voice frame that is delivered by the core network and received by the receiving module to a default initial rate of the calling MS; and
the sending module is specifically configured to send the voice frame that carries the default initial rate of the calling MS after being modified by the modification module to the calling MS, so that the calling MS performs voice encoding according to the default initial rate of the calling MS.

17. A base transceiver station, comprising:
a first receiving module, configured to receive a voice frame;
a modification module, configured to modify a rate adjustment indication carried in the voice frame received by the receiving module to a default initial rate; and
a sending module, configured to send the voice frame that carries the default initial rate after being modified by the modification module to a corresponding mobile station MS, so that the corresponding MS performs voice encoding according to the default initial rate.

18. The base transceiver station according to claim 17, wherein the first receiving module is specifically configured to receive a voice frame sent to a peer MS by a local MS before a call handover, and the voice frame carries a rate adjustment indication that is determined by the local MS according to quality of a local air interface;
accordingly, the modification module is specifically configured to modify the rate adjustment indication carried in the voice frame that is sent by the local MS and received by the first receiving module to a default initial rate of the local MS after the call handover; and
the sending module is specifically configured to send the voice frame that carries the default initial rate of the local MS after the call handover after being modified by the modification module to the peer MS, so that the peer MS performs voice encoding according to the default initial rate of the local MS after the call handover.

19. The base transceiver station according to claim 18, further comprising:
a second receiving module, configured to receive a call pre-handover notification sent by a base station control device, wherein the call pre-handover notification carries a voice encoding type used by the local MS after the call handover;
a determining module, configured to determine the default initial rate of the local MS after the call handover according to the voice encoding type used by the local MS after the call handover and received by the second receiving module; and
accordingly, the modification module is specifically configured to modify the rate adjustment indication carried in the voice frame that is sent by the local MS and received by the first receiving module to the default initial rate of the local MS after the call handover.

20. A system for controlling a voice encoding rate, comprising: a base station control device and a base transceiver station, wherein:
the base station control device is the base station control device according to claim 15 or 16; and the base transceiver station is the base transceiver station according to any one of claim 17 to claim 19.
